# EUROPÄISCHE PATENTSCHRIFT

(11) **EP 0 623 082 B1**
(45) Veröffentlichungstag und Bekanntmachung des Hinweises auf die Patenterteilung: **21.06.1995**
(21) Anmeldenummer: 93903878.2
(22) Anmeldetag: 26.01.1993
(51) Int. Cl.: B62D 5/04, F16D 43/02

(54) **HILFSKRAFTLENKEINRICHTUNG FÜR KRAFTFAHRZEUGE**
POWER-ASSISTED STEERING DEVICE FOR MOTOR VEHICLES
SYSTEME DE DIRECTION ASSISTEE POUR VEHICULES AUTOMOBILES

(30) Priorität: 27.01.1992 DE 4202116
(43) Veröffentlichungstag der Anmeldung: 09.11.1994
(73) Patentinhaber: ZF FRIEDRICHSHAFEN Aktiengesellschaft, 88038 Friedrichshafen (DE)
(72) Erfinder: BUDAKER, Martin, D-7072 Heubach (DE); HÄGELE, Gerhard, D-7083 Hohenstadt (DE); NAGEL, Willi, D-7070 Schwäbisch Gmünd (DE)
(86) Internationale Anmeldenummer: EP9300167
(87) Internationale Veröffentlichungsnummer: WO9314966

(56) Entgegenhaltungen:
- WO-A-91/05692
- DE-A- 2 746 919

## Beschreibung

Die Erfindung betrifft eine Hilfskraftlenkeinrichtung für Kraftfahrzeuge, die aus einer durch ein Lenkhandrad antreibbaren Lenkspindel mit einem Lenkgetriebe besteht. Die Hilfskraft wirkt als Drehmoment für jede Drehrichtung getrennt auf jeweils eine Kupplungseinrichtung. Die Kupplungseinrichtungen stellen über ein Untersetzungsgetriebe eine Antriebsverbindung von einer in nur einer Richtung drehenden Hilfsantriebsquelle zu einer in das Lenkgetriebe eintreibenden Abtriebswelle her.

Eine Hilfskraftlenkung in der vorbeschriebenen Bauart ist z. B. aus der DE 27 46 919 A1 bekannt. Ein Elektromotor wirkt hier über ein Schneckenrad und einen Freilauf auf ein Kegelritzel. Das Kegelritzel treibt zwei Kegelräder gegenläufig an, die jeweils mit Kupplungstrommeln verbunden sind. Weiterhin sind mit den Kupplungstrommeln zusammenwirkende und mit den Lenkspindeln verbundene Kupplungsbacken vorgesehen, die beim Einleiten einer Drehbewegung am Lenkhandrad ein Backenpaar in die in der gleichen Drehrichtung angetriebene Kupplungstrommel pressen. Auf diese Weise läßt sich die manuelle Drehbewegung durch den Elektromotor unterstützen, wobei sich die Höhe der Unterstützung proportional zum Lenkwiderstand verhält, der auf die gelenkten Räder einwirkt.

An den mit Reibbelägen arbeitenden Kupplungselementen können bei Trockenlauf erhebliche Reibwertschwankungen auftreten, so daß unter Umständen das Lenkverhalten in den Lenkrichtungen unterschiedlich beeinflußt wird. Außerdem sind bei den vorgesehenen Hebelverhältnissen der Kupplungsbacken die Verstellwege verhältnismäßig lang, woraus sich ein verzögertes Ansprechverhalten ergibt. Durch die verwickelte Bauweise der Kupplungselemente radial zur Lenkspindel ergibt sich ein verhältnismäßig großer Einbauraum. Schließlich findet zur verdrehweichen Verbindung der beiden Lenkspindelteile ein verhältnismäßig teuerer Drehstab Verwendung.

Die Aufgabe der Erfindung besteht darin, eine preisgünstige, elektrisch unterstützte Lenkanlage zu finden, bei welcher die Einleitung der Hilfskraft gleichmäßig und ohne Verzögerung in Abhängigkeit von der eingeleiteten Handkraft erfolgt. Eine weitere Forderung besteht darin, die Lenkanlage auch unter beengten Raumverhältnissen unterzubringen.

Die Lösung dieser Aufgabe ist im Hautanspruch wiedergegeben.

Die Erfindung besteht darin, daß als Kupplungseinrichtungen in einem gemeinsamen Käfig geführte, in beiden Drehrichtungen wirkende Klemmkörper vorgesehen sind und daß die Klemmkörper auf eine gemeinsame, in Funktionsabschnitte unterteilte und geschlitzte Klemmhülse einwirken. Die Klemmhülse liegt mit geringem Abstand innerhalb von zwei durch das Untersetzungsgetriebe in unterschiedlichen Drehrichtungen angetriebenen Kupplungsnaben. Die Kupplungseinrichtung arbeitet dabei so, daß bei einer Lenkbewegung in Abhängigkeit vom Lenkmoment am Lenkhandrad durch die Klemmkörper eine polygonale Aufspreizung einer der beiden Funktionsabschnitte der Klemmhülse gegen die eine oder andere Kupplungsnabe erfolgt. Diese Aufspreizung erzielt man durch Klemmschrägen am Innendurchmesser der Klemmhülse, auf denen die Klemmkörper auflaufen. Die Klemmhülse überträgt das Hilfsmoment, z. B. eines Elektromotors, in beiden Drehrichtungen auf die Abtriebswelle.

Die erfindungsgemäße Lenkeinrichtung arbeitet mit kleinen Verstellwegen, so daß das Hilfsmoment ohne Ansprechverzögerung in den Abtriebsteil der Lenkspindel eingeleitet werden kann. Da die Kupplungseinrichtung in einem Schmiermittel läuft, erhält man gleichmäßige Reibkräfte bei geringstem Verschleiß. Darüber hinaus läßt sich durch die platzsparende Bauweise der Kupplungselemente eine gedrungene Außenform erzielen, so daß sich die Lenkanlage auch in kleineren Fahrzeugen verwenden läßt.

Die Unteransprüche befassen sich mit der weiteren Ausgestaltung der Kupplungseinrichtung und zweckmäßigen Ausführungsformen.

Die Erfindung ist nicht auf die Merkmalskombinationen der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Anhand der Zeichnung wird nachfolgend die Erfindung an Ausführungsbeispielen näher erläutert. Es zeigen:
- Fig. 1: einen Längsschnitt durch eine elektrische Hilfskraftlenkung mit manueller Ansteuerung, bei der die Hilfseinheit in die Lenkung integriert ist;
- Fig. 2: einen verkleinerten Querschnitt nach der Linie II-II in Fig. 1;
- Fig. 3: einen verkleinerten Querschnitt nach der Linie III-III in Fig. 2;
- Fig. 4: einen vergrößerten Teilquerschnitt, in dem die Kupplungseinrichtungen für Links- und Rechtsfahrt in einer gedachten gemeinsamen Zeichnungsebene in Geradeausfahrtstellung gezeichnet sind;
- Fig. 5: einen vergrößerten Teilquerschnitt der einen Kupplungseinrichtung entsprechend Fig. 2 beim Lenken nach links;
- Fig. 6: einen vergrößerten Teilquerschnitt der anderen Kupplungseinrichtung entsprechend der Linie VI-VI in Fig. 1 beim Lenken nach rechts;
- Fig. 7 bis 10: verschiedene Ausführungsformen für die Klemmhülse in teilweisen Abwicklungen;
- Fig. 11: eine weitere Ausführungsform für eine Kupplungseinrichtung;
- Fig. 12: die zu der Kupplungseinrichtung nach Fig. 11 gehörende Klemmhülse in einer teilweisen Abwicklung;
- Fig. 13: eine Ausführungsform einer Kupplungseinrichtung mit nur einer Reihe von Kupplungskörpern;
- Fig. 14: eine teilweise Abwicklung der zugehörigen Klemmhülse und
- Fig. 15: eine weitere Ausführungsform im Teilquerschnitt entsprechend Fig. 4, jedoch mit zusätzlichen axialen Stegen an der Reibfläche der Klemmhülse.

Der Grundgedanke der Erfindung besteht darin, durch um die Lenkspindel gruppierte Klemmkörper, je nach Drehrichtung, zwei voneinander unabhängige Kupplungsnaben mit einer Klemmhülse zu koppeln, die in beiden Drehrichtungen wirksam ist. Die Klemmhülse stellt also über die Kupplungsnaben eine Verbindung von einer die Hilfkraft liefernden Antriebsquelle zum Lenkgetriebe her.

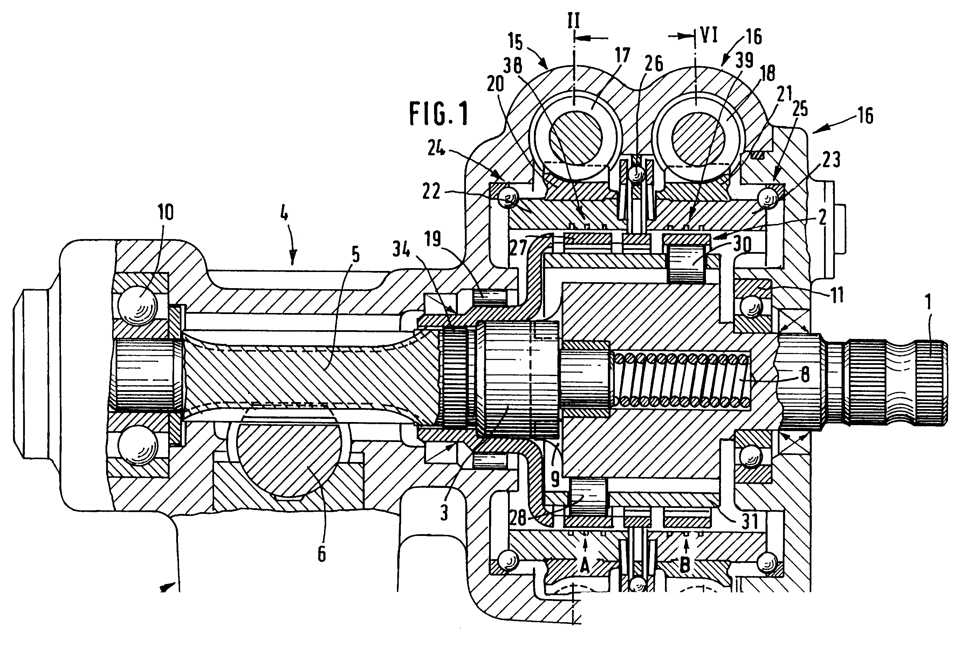

In Fig. 1 steht eine mit einem nicht gezeichneten Lenkhandrad verbundene Lenkspindel 1 über Kupplungseinrichtungen 2 mit einer Abtriebswelle 3 in Verbindung. Die Abtriebswelle 3 ist Teil eines Lenkgetriebes 4, im vorliegenden Falle eines aus einem Ritzel 5, einer Zahnstange 6 und einer Andrückvorrichtung 7 bestehenden Zahnstangenlenkgetriebes. Zwischen der Lenkspindel 1 und der Abtriebswelle 3 sitzt zum axialen Spielausgleich eine Feder 8. Die Axialkräfte lassen sich somit in Wälzlagern 10 und 11 aufnehmen, die zugleich das Ritzel 5 bzw. die Lenkspindel 1 radial abstützen. Ein weiteres Radialwälzlager 19 stützt die mit dem Ritzel 5 fest verbundene Abtriebswelle 3 und die auf der Abtriebswelle 3 gelagerte Lenkspindel 1 ab. An einem verdickten Teil der Lenkspindel 1 sind Aussparungen 9 angeordnet, die mit einem gewissen Verdrehspiel in Mitnehmer der Abtriebswelle 3 eingreifen. Die Feder 8 läßt ein solches Verdreh- oder Steuerspiel zu, die sich dabei geringfügig in sich verdreht.

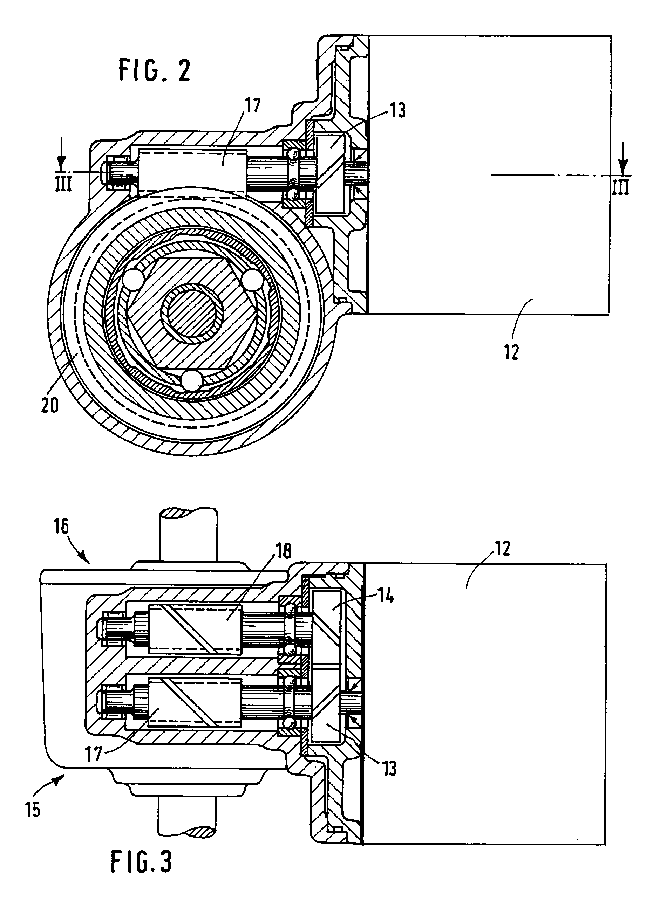

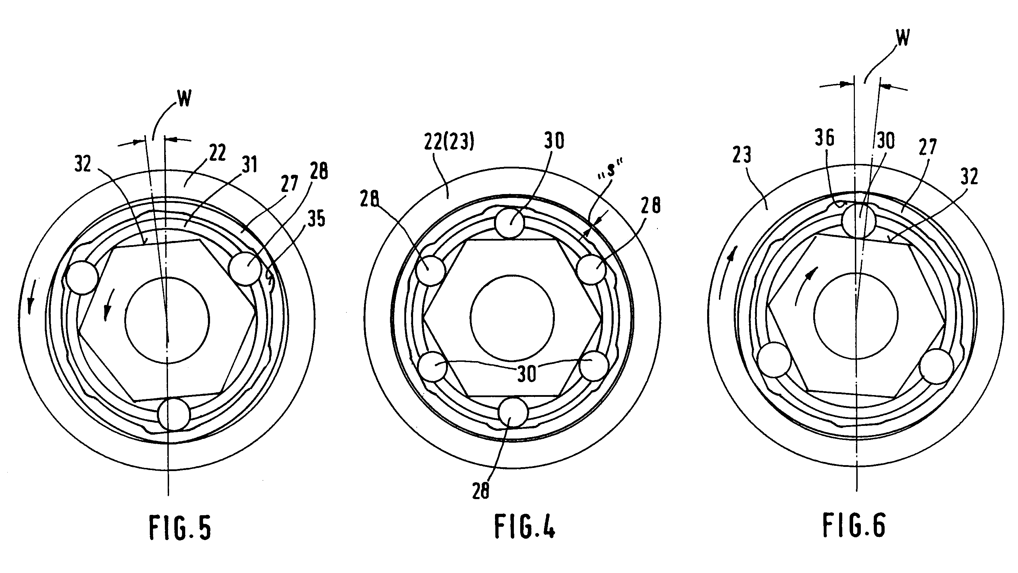

Nach Fig. 2 und 3 treibt eine die Hilfskraft liefernde Antriebsquelle, z. B. ein Elektromotor 12, über ein Stirnräderpaar 13 und 14 zwei Schneckengetriebe 15 und 16 gegenläufig an. Jedes Schneckengetriebe besteht aus einem Ritzel 17 bzw. 18, welches mit einem Rad 20 bzw. 21 in Eingriff steht. Jedes Rad 20 und 21 ist mit einer Kupplungsnabe 22 bzw. 23 verbunden (Fig. 1). Die Kupplungsnaben 22 bzw. 23 stützen sich in Schräglagern 24 und 25 ab. Zwischen den beiden Kupplungsnaben 22 und 23 befindet sich ein sogenanntes Spreizlager 26, welches für eine spielfreie axiale Anlage der Kupplungsnaben in den Schräglagern 24 und 25 sorgt. Die für jede Lenkrichtung getrennten Kupplungseinrichtungen bestehen neben den Kupplungsnaben 22 und 23 aus einer in zwei Funktionsabschnitte A und B unterteilten Klemmhülse 27, aus zwei Reihen von Klemmkörpern 28 und 30, einem gemeinsamen Käfig 31 sowie aus mehreren Laufflächen 32 für die Klemmkörper (Fig. 5 bis 7). Im vorliegenden Ausführungsbeispiel hat der verdickte Teil der Lenkspindel 1 ein Sechskant-Profil, dessen Flächen als Laufflächen 32 genutzt werden. Die Klemmkörper 28 und 30 sind in dem gemeinsamen Käfig 31 gehalten. Die Klemmhülse 27 umgreift die beiden Reihen von Klemmkörpern 28 und 30 glockenartig. Zwischen der Klemmhülse 27 und den beiden Kupplungsnaben 22 und 23 verbleibt ein Spiel "S" (Fig. 4). Die Klemmhülse 27 ist zweckmäßig mit einer Kerbverzahnung 34 auf der Abtriebswelle 3 befestigt. Die Klemmhülse 27 kann man auch als zylindrisches Bauteil ohne den glockenartigen Ansatz ausführen. In diesem Fall sieht man einen entsprechend großen Bund an der Abtriebswelle 3 vor, der sich an das zylindrische Bauteil (Klemmhülse 27) anflanschen läßt.

Die Funktionsabschnitte A und B der Klemmhülse 27 haben in entgegengesetzten Richtungen angelegte Klemmschrägen 35 und 36. Der Neigungswinkel der Klemmschrägen 35 mit den zugehörigen Klemmkörpern 28 ist aus Fig. 5 für einen Lenkausschlag nach links und der Neigungswinkel der Klemmschrägen für die Klemmkörper 30 für einen Lenkausschlag nach rechts aus Fig. 6 ersichtlich.

Füllt man einen Einbauraum der Kupplungseinrichtungen 2 mit einem Schmiermittel, so erzielt man eine verschleißarme Kraftübertragung. Wie aus Fig. 1 ersichtlich, ist es vorteilhaft, in die Kupplungsnaben 22 und 23 im Bereich der Funktionsabschnitte A und B der Klemmhülse 27 Schmiernuten 38 bzw. 39 einzuarbeiten. Diese Schmiernuten sorgen für ein schnelles Verdrängen des vorhandenen Schmiermittelkeiles. Man erhält auf diese Weise einen höheren Reibwert und ein gleichmäßiges Einleiten des Hilfsmoments.

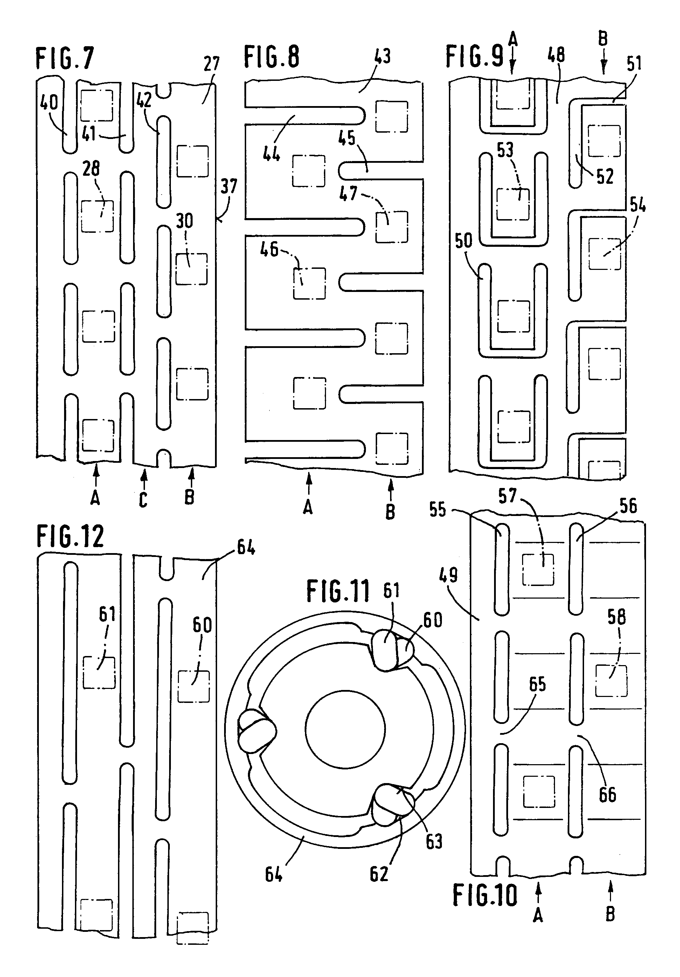

Die Fig. 7 zeigt die Klemmhülse 27 nach Fig. 1 in der Abwicklung. Die Klemmhülse 27 hat über den Umfang verteilt drei Reihen von Schlitzen 40, 41 und 42. Die Schlitze 40 und 41 liegen auf gleicher Höhe, während die Schlitze 42 zu den vorgenannten Schlitzen versetzt angeordnet sind. Die Schlitze 40 und 41 schließen den Funktionsabschnitt A zwischen sich ein, während die Schlitze 42 und ein äußerer Rand 37 der Klemmhülse den Funktionsabschnitt B bilden. Zwischen den nahe beieinanderliegenden Schlitzen 41 und 42 liegt eine neutrale Zone C. Die Schlitzreihen 40, 41, 42 liegen so zueinander, daß die Funktionsabschnitte A und B in radialer Richtung durch eine polygonale Verformung voneinander abgekoppelt, jedoch in Umfangsrichtung starr miteinander verbunden sind. Die Klemmkörper 28 liegen in der Mitte der Schlitze 40 und 41 und die Klemmkörper 30 liegen versetzt zu den Klemmkörpern 28 zwischen den Schlitzen 42 und dem Rand 37. Die Klemmkörper 28 und 30 laufen im Innendurchmesser der Klemmhülse 27 in den entsprechenden Klemmschrägen 35 bzw. 36.

Die Hilfskraftlenkung arbeitet wie folgt: Die Fig. 4 zeigt die Stellung für die Geradeausfahrt. Dabei befinden sich die in derselben Zeichnungsebene dargestellten Klemmkörper 28 und 30 in ihrer neutralen Mittenstellung. Die Klemmhülse 27 hält dabei an ihrem gesamten Umfang gegenüber den beiden Kupplungsnaben 22 und 23 das mit "S" bezeichnete Spiel ein. Eine Kraftübertragung von der Klemmhülse 27 auf eine der beiden Kupplungsnaben 22 bzw. 23 kann demnach nicht stattfinden.

Leitet der Fahrer am Lenkhandrad entsprechend Fig. 5 durch Linksdrehen ein Drehmoment in die Lenkspindel 1 ein, dann stellen sich die Laufflächen 32 der Lenkspindel 1 in Pfeilrichtung an. Die Klemmkörper 28 drücken sich in die Klemmschrägen 35, wobei ein Steuerweg "W" zurückgelegt wird. Der mit A bezeichnete Funktionsabschnitt der Klemmhülse 27 weitet sich dabei über den Klemmkörpern 28 auf. Die Klemmhülse 27 preßt sich dabei in die vom Elektromotor 12 in der entsprechenden Drehrichtung angetriebene Kupplungsnabe 22 hinein. Die Hilfskraft läßt sich somit über die Klemmhülse 27 in die Abtriebswelle 3 und über das Lenkgetriebe 4 in die gelenkten Räder einleiten. Bei diesem Vorgang ist zu beachten, daß nur der Funktionsabschnitt A der Klemmhülse 27 wirksam ist. Von der neutralen Zone C ab erfolgt keine weitere Verformung, sondern diese erhält wegen der besonderen Anordnung der Schlitze 40, 41, 42 ihr Spiel "S" in bezug auf die Kupplungsnabe 23 bei. Übt der Fahrer keine Lenkkraft mehr aus, dann rollen die Klemmkörper 28 in ihre Mittenstellung (Fig. 4) zurück, d. h., die Lenkung bewegt sich wieder in die Neutrallage. Die Klemmkörper 28 übernehmen also die Funktion eines sonst üblichen Drehstabes.

Beim Drehen des Lenkhandrades nach rechts weitet sich die Klemmhülse 27 in ihrem Funktionsabschnitt B durch die dann wirksamen Klemmkörper 30 polygonal in die Kupplungsnabe 23 auf, wie aus Fig. 6 näher zu ersehen ist. Da das Schneckengetriebe 16 die Kupplungsnabe 23 in der Gegenrichtung antreibt, dreht die Klemmhülse 27 zusammen mit der Abtriebswelle 3 in der durch die Pfeile angegebenen Richtung an.

Falls der Elektromotor 12 aufgrund einer Störung ausfallen sollte, läßt sich dieser mit Hilfe eines nicht sichtbaren Freilaufs vom Lenkungsstrang entkoppeln. Der Fahrer muß dann den Elektromotor bei eher Lenkbewegung nicht mit erhöhtem Kraftaufwand mitdrehen. Das gesamte Drehmoment wird nach Überwinden des durch die Mitnehmer 9 geschaffenen Verdrehspiels von der Lenkspindel 1 auf die Abtriebswelle 3 übertragen.

Die Ausführungsform einer Klemmhülse 43 nach Fig. 8 zeigt zwei auf den Umfang verteilte und zueinander versetzte, axial gerichtete Reihen von Schlitzen 44 und 45, die wiederum Funktionsabschnitte A und B bilden. Hier liegen die Klemmkörper 46 bzw. 47 in der Verlängerung zu den Schlitzen 44 und 45.

In einer weiteren Ausführungsform einer Klemmhülse 48 nach Fig. 9 sind den Funktionsabschnitten A und B U-förmige Schlitze 50 und mit ihren kurzen Schenkeln 51 nach außen gerichtete L-förmige Schlitze 52 zugeordnet. Die Klemmkörper 53 des Funktionsabschnittes A liegen innerhalb der U-Form und die Klemmkörper 54 des Funktionsabschnittes B liegen innerhalb der L-Form.

In einer anderen Ausführungsform nach Fig. 10 verwendet man eine Klemmhülse 49 mit zwei in Umfangsrichtung zueinander ausgerichteten Reihen von Schlitzen 55 und 56. Hier liegen die Klemmkörper 57 des Funktionsabschnittes A zwischen jedem zweiten Paar der zueinander ausgerichteten Schlitze 55 und 56. Dabei liegen Verbindungsstege 65 und 66 zwischen den Funktionsabschnitten A und B in einer aufweitungsneutralen Zone, d. h. in dem Bereich, in dem die Klemmhülse 49 radial nicht verformt wird.
Zwischen einem Rand der Klemmhülse 49 und der etwa in der Mitte liegenden Reihe der Schlitze 56 liegen zu den Klemmkörpern 57 versetzt die Klemmkörper 58 des Funktionsabschnittes B.

Die Ausführung nach den Fig. 11 und 12 zeigt Klemmkörper 60 und 61 in der Form von balligen Klemmplatten. Diese Klemmkörper 60, 61 stützen sich zwischen gemeinsamen Nuten 63 der Lenkspindel und Einprägungen 62 auf der Innenseite der Klemmhülse 64 ab. Die Klemmkörper 60 bzw. 61 sind gegen ihre jeweilige Wirkrichtung schräggestellt und richten sich beim Lenken auf. Dabei spannt sich die Klemmhülse 64, wie in den vorher besprochenen Ausführungen, punktförmig in der zugeordneten Kupplungsnabe fest. Selbstverständlich ist es auch möglich, die Abstützung für die Klemmkörper 60 und 61 so abzuändern, daß die Nuten 63 in der Klemmhülse 64 und die Einprägungen in der Lenkspindel liegen.

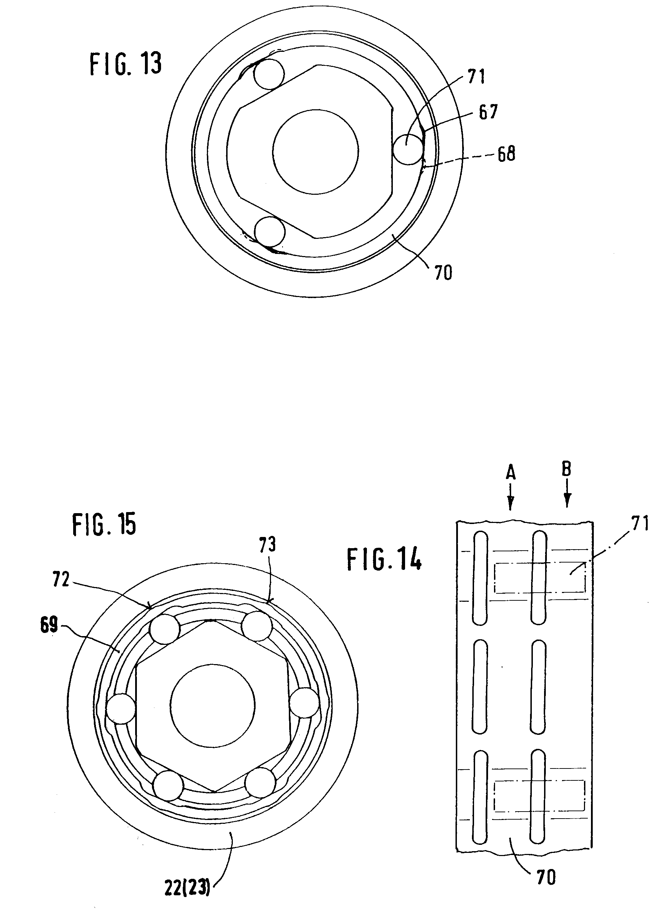

Die Fig. 13 und 14 zeigen schließlich eine Ausführung mit einer Klemmhülse 70, die in ihren Funktionsabschnitten A und B gegensinnig geneigte Klemmschrägen 67 bzw. 68 aufweist. Diese Klemmschrägen 67 und 68 wirken mit nur einer Reihe von Klemmkörpern 71 zusammen, die jedoch eine größere Länge und somit zwei in ihrer Funktion getrennte Arbeitsbereiche aufweisen. Ein Käfig kann hier entfallen. Je nach Drehrichtung aktiviert einer der beiden Arbeitsbereiche den Funktionsabschnitt A oder den Funktionsabschnitt B der Klemmhülse 70.

Zur Erhöhung der Verschleißfestigkeit können die Reibflächen der Kupplungsnaben 22 und 23 mit einem verschleißfesten Material beschichtet sein. Die Reibflächen lassen sich beispielsweise nitrocarbonieren oder mit einem Molybdänauftrag versehen.

Liegen beim Einbau der Hilfskraftlenkung, beispielsweise in einen Kleinwagen, besonders beengte Raumverhältnisse vor, so läßt sich der Elektromotor 12 von der übrigen Baueinheit (Schneckengetriebe 16, Kupplungseinrichtungen 2, Lenkgetriebe 4) trennen. Der Elektromotor 12 läßt sich z. B. unterhalb der Windschutzscheibe an der Spritzwand oder an einem Radhaus befestigen und die Verbindung mit dem Schneckengetriebe 16 kann durch eine Gelenkwelle oder eine biegsame Welle hergestellt werden.

Es liegt im Rahmen der Erfindung, eine aus dem Schneckengetriebe 16 und den Kupplungseinrichtungen 2 bestehende Baueinheit unmittelbar unterhalb des Lenkhandrades einzubauen und die Verbindung zum Lenkgetriebe 4 über eine verlängerte Abtriebswelle 3 herzustellen.

Eine weitere Ausführung nach Fig. 15 zeigt eine Klemmhülse 69 mit Schlitzen und zugeordneten Wälzkörpern nach einer der Fig. 7 bis 10 oder 12. Ein wesentlicher Unterschied besteht jedoch darin, daß die Reibfläche im Bereich der Wälzkörper mit schmalen, axial verlaufenden Stegen 72 bzw. 73 versehen ist. Je nach Lenkrichtung kommen die Stege 72 oder 73 im entsprechenden Funktionsabschnitt A oder B in der Kupplungsnabe 22 oder 23 (Fig. 1) zur Anlage. Aus Herstellungsgründen erstrecken sich die Stege 72 und 73 über die gesamte Breite der Klemmhülse 69. Diese Stege haben die Eigenschaft, daß sie den Schmiermittelfilm leicht durchdringen und daher eine temperaturunabhängige Kraftübertragung ermöglichen.

Als Überlastsicherung enthält der Elektromotor vorteilhaft einen Temperaturfühler, der bei zu starker Erwärmung die Stromzufuhr unterbricht.

Aus Gründen der Energieeinsparung ist es außerdem zweckmäßig, den Elektromotor erst ab einer niedrigen Fahrgeschwindigkeit einzuschalten (z. B. v = < 10 km/h), so daß die Lenkkraftunterstützung erst bei höheren Lenkkräften wirksam wird.

### Bezugszeichen

- 1: Lenkspindel
- 2: Kupplungseinrichtung
- 3: Abtriebswelle
- 4: Lenkgetriebe
- 5: Ritzel
- 6: Zahnstange
- 7: Andrückvorrichtung
- 8: Feder
- 9: Mitnehmer
- 10: Wälzlager
- 11: Wälzlager
- 12: Elektromotor
- 13: Stirnrad
- 14: Stirnrad
- 15: Schneckengetriebe
- 16: Schneckengetriebe
- 17: Ritzel
- 18: Ritzel
- 19: Radial-Wälzlager
- 20: Rad
- 21: Rad
- 22: Kupplungsnabe
- 23: Kupplungsnabe
- 24: Schräglager
- 25: Schräglager
- 26: Spreizlager
- 27: Klemmhülse
- 28: Klemmkörper
- 29: -
- 30: Klemmkörper
- 31: Käfig
- 32: Lauffläche
- 33: -
- 34: Kerbverzahnung
- 35: Klemmschräge
- 36: Klemmschräge
- 37: Rand von 27
- 38: Schmiernuten
- 39: Schmiernuten
- 40: Schlitze
- 41: Schlitze
- 42: Schlitze
- 43: Klemmhülse
- 44: Schlitze
- 45: Schlitze
- 46: Klemmkörper
- 47: Klemmkörper
- 48: Klemmhülse
- 49: Klemmhülse
- 50: U-förmige Schlitze
- 51: kurze Schenkel
- 52: L-förmige Schlitze
- 53: Klemmkörper
- 54: Klemmkörper
- 55: Schlitze
- 56: Schlitze
- 57: Klemmkörper
- 58: Klemmkörper
- 59: -
- 60: Klemmkörper (Platten)
- 61: Klemmkörper
- 62: Einprägungen
- 63: Nuten
- 64: Klemmhülse
- 65: Verbindungssteg
- 66: Verbindungssteg
- 67: Klemmschräge
- 68: Klemmschräge
- 69: Klemmhülse
- 70: Klemmhülse
- 71: Klemmkörper
- 72: Steg
- 73: Steg

## Patentansprüche

1. Hilfskraftlenkeinrichtung für Kraftfahrzeuge mit folgenden Merkmalen:
- es ist eine durch ein Lenkhandrad antreibbare Lenkspindel (1) vorgesehen, die mit einem Lenkgetriebe (4) verbunden ist;
- die Hilfskraft wirkt als Drehmoment für jede Drehrichtung getrennt auf je eine Kupplungseinrichtung (22, 27, 28, 32 bzw. 23, 27, 30, 32);
- die Kupplungseinrichtungen stellen über ein Untersetzungsgetriebe eine Antriebsverbindung von einer Hilfsantriebsquelle (Elektromotor 12) zu einer in das Lenkgetriebe (4) eintreibenden Abtriebswelle (3) her,
**gekennzeichnet,** durch folgende Merkmale:
- als Kupplungseinrichtungen (2) sind in einem gemeinsamen Käfig (31) geführte, in beiden Drehrichtungen wirkende Klemmkörper (28; 30) vorgesehen,
- die Klemmkörper (28, 30) wirken auf eine gemeinsame, in Funktionsabschnitte (A und B) unterteilte, geschlitzte Klemmhülse (27) und
- die Klemmhülse (27) liegt mit geringem Spiel "S" innerhalb von zwei durch das Untersetzungsgetriebe (Schneckengetriebe 15, 16) angetriebenen Kupplungsnaben (22 und 23), derart,
- daß bei einer Lenkbewegung in Abhängigkeit vom ausgeübten Lenkmoment eine polygonale Aufspreizung eines Funktionsabschnittes (A oder B) der Klemmhülse (27), je nach Lenkrichtung, gegen die eine oder andere Kupplungsnabe (22 bzw. 23) erfolgt.

2. Hilfskraftlenkeinrichtung nach Anspruch 1, mit folgenden Merkmalen:
- die Klemmhülse (27) ist einteilig ausgeführt und weist drei in Umfangsrichtung verlaufende Reihen von Schlitzen (40, 41, 42) auf;
- für jede Drehrichtung sind getrennt voneinander wirkende Reihen von Klemmkörpern (28 bzw. 30) vorgesehen;
- zwischen zwei in ihrer Lage zueinander ausgerichteten Reihen von Schlitzen (40 und 41) sind die Klemmkörper (28) eines Funktionsabschnittes (A) angeordnet;
- die Klemmkörper (30) des anderen Funktionsabschnittes (B) liegen am äußeren Rand (37) neben einer weiteren Reihe von Schlitzen (42), die zu den zueinander ausgerichteten Schlitzen (40 und 41) versetzt angeordnet ist und
- die Klemmkörper (28 und 30) liegen am Innendurchmesser der Klemmhülse (27) in Klemmschrägen (35 bzw. 36), deren Neigungswinkel in einem Funktionsabschnitt (A) entgegengesetzt zum anderen Funktionsabschnitt (B) verlaufen (Fig. 1).

3. Hilfskraftlenkeinrichtung nach Anspruch 1, dadurch **gekennzeichnet,** daß die Klemmhülse (27) mittels einer Kerbverzahnung (34) auf der Abtriebswelle (3) befestigt ist und diese die Lenkspindel (1) glockenartig umgreift (Fig. 1).

4. Hilfskraftlenkeinrichtung nach Anspruch 3, dadurch **gekennzeichnet,** daß die Klemmrollen (28 und 30) jedes Funktionsabschnittes (A und B) mittig zu den Schlitzen (40, 41 bzw. 42) liegen (Fig. 7).

5. Hilfskraftlenkeinrichtung nach Anspruch 1, **gekennzeichnet** durch folgende Merkmale:
- die Klemmhülse (43) weist zwei axial von beiden Stirnseiten nach innen verlaufende und versetzt zueinanderliegende Reihen von Schlitzen (44 und 45) auf und
- die Klemmkörper (46, 47) sind in der Verlängerung der Schlitze (44 und 45) angeordnet (Fig. 8).

6. Hilfskraftlenkeinrichtung nach Anspruch 1, **gekennzeichnet,** durch folgende Merkmale:
- die Klemmhülse (48) weist in ihrem einen Funktionsabschnitt (A) in Umfangsrichtung offene, U-förmige Schlitze (50) auf, innerhalb welcher die Klemmkörper (53) einer Reihe liegen und
- der andere Funktionsabschnitt (B) hat mit ihren kurzen Schenkeln (51) zum Rand gerichtete, L-förmige Schlitze (51), welche die Klemmkörper (54) der anderen Reihe umfassen (Fig. 9).

7. Hilfskraftlenkeinrichtung nach Anspruch 1, **gekennzeichnet,** durch folgende Merkmale:
- die Klemmhülse (49) weist zwei in Umfangsrichtung verlaufende, zueinander ausgerichtete Reihen von Schlitzen (55 und 56) auf, mit im einen Funktionsabschnitt (A) zwischen jedem zweiten Paar von Schlitzen (55 und 56) angeordneten Klemmkörpern (57) und
- zwischen dem Rand der Klemmhülse (49) und der etwa in der Mitte liegenden Reihe der Schlitze (56) befinden sich zu den Klemmkörpern (57) des einen Funktionsabschnitts (A) versetzt die Klemmkörper (58) des anderen Funktionsabschnittes (B) (Fig. 10).

8. Hilfskraftlenkeinrichtung nach Anspruch 1, **gekennzeichnet,** durch folgende Merkmale:
- die Klemmkörper (60, 61) sind als ballige Klemmplatten ausgeführt und
- die Klemmkörper (60, 61) stützen sich zwischen gemeinsamen Nuten (63) der Lenkspindel (1) und in Einprägungen (62) der Klemmhülse (64) ab, wobei die Klemmkörper jeweils gegen ihre Wirkrichtung schräggestellt werden (Fig. 11).

9. Hilfskraftlenkung nach Anspruch 1, dadurch **gekennzeichnet,** daß den Funktionsabschnitten (A und B) gegensinnig geneigte Klemmschrägen (67 bzw. 68) der Klemmhülse (70) zugeordnet sind, wobei die Klemmrollen (71) in die Klemmschrägen beider Funktionsabschnitte eingreifen (Fig. 12 und 13).

10. Hilfskraftlenkeinrichtung nach Anspruch 1, dadurch **gekennzeichnet,** daß die Kupplungseinrichtungen (2) in einem Schmiermittel laufen.

11. Hilfskraftlenkeinrichtung nach Anspruch 1, dadurch **gekennzeichnet,** daß die Kupplungsnaben (22 und 23) durch ein Spreizlager (26) in Schräglagern (24 und 25) axial spielfrei gelagert sind (Fig. 1).

12. Hilfskraftlenkeinrichtung nach Anspruch 1, dadurch **gekennzeichnet,** daß der Elektromotor (12) von der aus Schneckengetriebe (16), Kupplungseinrichtungen (2) und Lenkgetriebe (4) bestehenden Baueinheit räumlich getrennt untergebracht ist und die Verbindung über eine Gelenkwelle oder eine biegsame Welle erfolgt (ohne Zeichnung).

13. Hilfskraftlenkeinrichtung nach Anspruch 1, dadurch **gekennzeichnet,** daß die Lenkspindel (1) und die Abtriebswelle (3) durch eine Feder (8) in den Wälzlagern (10 und 11) axial spielfrei gelagert sind (Fig. 1).

14. Hilfskraftlenkeinrichtung nach Anspruch 1, dadurch **gekennzeichnet,** daß in die Kupplungsnaben (22 und 23) Schmiernuten (38 bzw. 39) eingearbeitet sind.

15. Hilfskraftlenkeinrichtung nach Anspruch 1, dadurch **gekennzeichnet,** daß die Reibflächen der Kupplungsnaben (22 und 23) mit einem verschleißfesten Material beschichtet sind.

16. Hilfskraftlenkeinrichtung nach Anspruch 1, dadurch **gekennzeichnet,** daß die Außenfläche der Klemmhülse (69) im Andrückbereich der Klemmkörper (28 und 30) axiale Stege (72 bzw. 73) aufweist (Fig. 15).

17. Hilfskraftlenkeinrichtung nach Anspruch 1, dadurch **gekennzeichnet,** daß der Elektromotor (12) einen Temperaturfühler (z. B. Bimetallfeder) enthält, der bei einer bestimmten Temperatur die Stromzufuhr unterbricht (ohne Zeichnung).

18. Hilfskraftlenkeinrichtung nach Anspruch 1, dadurch **gekennzeichnet,** daß der Elektromotor (12) in Abhängigkeit von einer niedrigen Fahrgeschwindigkeit (z. B. v = < 10 km/h) einschaltbar und bei Überschreiten dieser Geschwindigkeit abschaltbar ist (ohne Zeichnung).

## Claims

1. Power-assisted steering device for motor vehicles, having the following features:
- a steering shaft (1) operable by a steering wheel is provided, which is connected to a steering gear (4);
- the auxiliary power acts as a torque for each direction of rotation separately upon a respective coupling device (22, 27, 28, 32 or 23, 27, 30, 32);
- the coupling devices via a reduction gearing establish a drive connection from an auxiliary drive source (electric motor 12) to an output shaft (3) with input into the steering gear (4),
characterized by the following features:
- as coupling devices (2), clamping elements (28; 30) guided in a common cage (31) and operating in both directions of rotation are provided,
- the clamping elements (28, 30) act upon a common, slotted clamping sleeve (27), which is subdivided into operating sections (A and B), and
- the clamping sleeve (27) is situated with slight play "S" inside two coupling hubs (22 and 23) driven by the reduction gearing (worm gear 15, 16) in such a way
- that, upon a steering movement, there occurs as a function of the exerted steering moment a polygonal spreading of an operating section (A or B) of the clamping sleeve (27) towards one or the other coupling hub (22 or 23) depending on the steering direction.

2. Power-assisted steering device according to claim 1, having the following features:
- the clamping sleeve (27) is of a single-part construction and has three rows of slots (40, 41, 42) extending in a peripheral direction;
- for each direction of rotation, separately operating rows of clamping elements (28 or 30) are provided;
- the clamping elements (28) of one operating section (A) are disposed between two rows of slots (40 and 41) which are positionally aligned with one another;
- the clamping elements (30) of the other operating section (B) lie at the outer edge (37) next to a further row of slots (42) which are disposed offset relative to the aligned slots (40 and 41) and
- the clamping elements (28 and 30) lie against the internal diameter of the clamping sleeve (27) in clamping bevels (35 and 36), whose angles of inclination in one operating section (A) extend in the opposite direction to the other operating section (B) (Fig.1).

3. Power-assisted steering device according to claim 1, characterized in that the clamping sleeve (27) is fastened by means of a notched toothing (34) on the output shaft (3) and the latter in a bell-like manner embraces the steering shaft (1) (Fig.1).

4. Power-assisted steering device according to claim 3, characterized in that the clamping rollers (28 and 30) of each operating section (A and B) are situated centrically in relation to the slots (40, 41 and 42) (Fig.7).

5. Power-assisted steering device according to claim 1, characterized by the following features:
- the clamping sleeve (43) has two rows of slots (44 and 45), which extend axially inwards from both end faces and are offset relative to one another, and
- the clamping elements (46, 47) are disposed in the extension of the slots (44 and 45) (Fig.8).

6. Power-assisted steering device according to claim 1, characterized by the following features:
- the clamping sleeve (48) in its one operating section (A) has U-shaped slots (50), which are open in a peripheral direction and inside which the clamping elements (53) of one row are situated, and
- the other operating section (B) has L-shaped slots (51), whose short limbs (51) are directed towards the edge and which encompass the clamping elements (54) of the other row (Fig.9).

7. Power-assisted steering device according to claim 1, characterized by the following features:
- the clamping sleeve (49) has two rows of slots (55 and 56) extending in a peripheral direction and aligned with one another, with clamping elements (57) being disposed in the one operating section (A) between every second pair of slots (55 and 56), and
- the clamping elements (58) of the other operating section (B) are situated, offset in relation to the clamping elements (57) of the one operating section (A), between the edge of the clamping sleeve (49) and the substantially central row of slots (56) (Fig.10).

8. Power-assisted steering device according to claim 1, characterized by the following features:
- the clamping elements (60, 61) take the form of crowned clamping plates and
- the clamping elements (60, 61) are supported between common grooves (63) of the steering shaft (1) and in impressions (62) of the clamping sleeve (64), the clamping elements in each case being inclined counter to their operating direction (Fig.11).

9. Power-assisted steering device according to claim 1, characterized in that clamping bevels (67 and 68) of the clamping sleeve (70) which slope in opposite directions are associated with the operating sections (A and B), the clamping rollers (71) engaging into the clamping bevels of both operating sections (Figs.12 and 13).

10. Power-assisted steering device according to claim 1, characterized in that the coupling devices (2) run in a lubricant.

11. Power-assisted steering device according to claim 1, characterized in that the coupling hubs (22 and 23) are supported by means of an expanding bearing (26) axially without play in angular-contact bearings (24 and 25) (Fig.1).

12. Power-assisted steering device according to claim 1, characterized in that the electric motor (12) is housed spatially separate from the structural unit comprising worm gear (16), coupling devices (2) and steering gear (4) and the connection is effected via an articulated shaft or a flexible shaft (not shown).

13. Power-assisted steering device according to claim 1, characterized in that the steering shaft (1) and the output shaft (3) are supported by means of a spring (8) axially without play in the rolling bearings (10 and 11) (Fig.1).

14. Power-assisted steering device according to claim 1, characterized in that lubricating grooves (38 and 39) are worked into the coupling hubs (22 and 23).

15. Power-assisted steering device according to claim 1, characterized in that the friction surfaces of the coupling hubs (22 and 23) are coated with a wear-resistant material.

16. Power-assisted steering device according to claim 1, characterized in that the outer surface of the clamping sleeve (69) has axial webs (72 and 73) in the contact region of the clamping elements (28 and 30) (Fig.15).

17. Power-assisted steering device according to claim 1, characterized in that the electric motor (12) contains a temperature detector (e.g. a bimetallic spring) which, at a specific temperature, interrupts the powder supply (not shown).

18. Power-assisted steering device according to claim 1, characterized in that the electric motor (12) may be switched on in dependence upon a low driving speed (e.g. v = < 10 km/h) and switched off when said speed is exceeded (not shown).

## Revendications

1. Direction assistée pour véhicules automobiles dans laquelle :
- il est prévu un arbre de direction (1) entraîné par un volant de direction et raccordé à un mécanisme de direction (4);
- l'assistance agit sous forme d'un couple séparément pour chaque sens de rotation sur un dispositif d'accouplement respectif (22, 27, 28, 32; resp. 23, 27, 30, 32);
- les dispositifs d'accouplement établissent, par l' entremise d'un engrenage de réduction, une liaison motrice d'une source d'assistance (moteur électrique 12) à un arbre de sortie (3) attaquant le mécanisme de direction (4),
**caractérisée** par les caractéristiques suivantes :
- pour former les dispositifs d'accouplement (2), il est prévu des éléments de serrage (28; 30), guidés dans une cage commune (31) et agissant dans les deux sens de rotation,
- les éléments de serrage (28, 30) agissent sur une douille de serrage (27) commune pourvue de fentes et subdivisée en sections fonctionnelles (A et B), et
- la douille de serrage (27) est montée avec un faible jeu "S" à l'intérieur de deux moyeux d'accouplement (22 et 23) entraînés par l'engrenage de réduction (engrenage à vis 15, 16), de telle sorte que
- lors d'un mouvement de braquage, en fonction du couple de braquage exercé, il se produit une expansion en polygone d'une section fonctionnelle (A ou B) de la douille de serrage (27) contre l'un ou l'autre des moyeux d'accouplement (22 ou 23), selon le sens de braquage.

2. Direction assistée selon la revendication 1, comportant les caractéristiques suivantes :
- la douille de serrage (27) est réalisée en une pièce et comporte trois rangées de fentes (40, 41, 42) en direction circonférentielle;
- pour chaque sens de rotation, il est prévu des rangées d'éléments de serrage (28, 30) agissant séparément l'une de l'autre;
- les éléments de serrage (28) d'une section fonctionnelle (A) sont disposés entre deux rangées de fentes (40 et 41) mutuellement alignées en situation;
- les éléments de serrage (30) de l'autre section fonctionnelle (B) se trouvent au bord extérieur (37) à côté d'une autre rangée de fentes (42) qui sont décalées par rapport aux fentes mutuellement alignées (40 et 41), et
- les éléments de serrage (28 et 30) s'appuient sur le diamètre intérieur de la douille de serrage (27) dans des biais de serrage (35 et 36) dont les angles d'inclinaison sont opposés dans une section fonctionnelle (A) par rapport à l'autre section fonctionnelle (B) (Fig. 1).

3. Direction assistée selon la revendication 1, **caractérisée** en ce que la douille de serrage (27) est fixée sur l'arbre de sortie (3) au moyen de cannelures (34) et entoure l'arbre de direction (1) par une forme en cloche (Fig. 1).

4. Direction assistée selon la revendication 3, **caractérisée** en ce que les galets de serrage (28 et 30) de chaque section fonctionnelle (A et B) sont disposés au milieu par rapport aux fentes (40, 41, 42) (Fig. 7).

5. Direction assistée selon la revendication 1, **caractérisée** par les caractéristiques suivantes :
- la douille de serrage (43) comporte deux rangées de fentes (44 et 45) mutuellement décalées et s'étendant axialement vers l'intérieur à partir de deux faces frontales et
- les éléments de serrage (46, 47) sont disposés dans le prolongement des fentes (44 et 45) (Fig. 8).

6. Direction assistée selon la revendication 1, **caractérisée** par les caractéristiques suivantes :
- la douille de serrage (48) comporte, dans sa première section fonctionnelle (A), des fentes en forme de U (50), ouvertes en direction circonférentielle et à l'intérieur desquelles se trouvent les éléments de serrage (53) d'une rangée, et
- l'autre section fonctionnelle (B) comporte des fentes en forme de L (52) qui entourent les éléments de serrage (54) de l'autre rangée et dont les branches courtes (51) sont dirigées vers le bord (Fig. 9).

7. Direction assistée selon la revendication 1, **caractérisée** par les caractéristiques suivantes :
- la douille de serrage (49) comporte deux rangées de fentes (55 et 56) s'étendant en direction circonférentielle et mutuellement alignées les éléments de serrage (57) de la première section fonctionnelle (A) étant disposés entre les fentes (55 et 56) d'une paire de fentes sur deux, et
- les éléments de serrage (58) de l'autre section fonctionnelle (B) se trouvent entre le bord de la douille de serrage (49) et la rangée de fentes (56) située approximativement au milieu dans des positions décalées par rapport aux éléments de serrage (57) de la première section fonctionnelle (A) (Fig. 10).

8. Direction assistée selon la revendication 1, **caractérisée** par les caractéristiques suivantes :
- les éléments de serrage (60, 61) sont réalisés sous la forme de plaques de serrage convexes et
- les éléments de serrage (60, 61) s'appuient entre des rainures communes (63) de l'arbre de direction (1) et des empreintes (62) ménagées dans la douille de serrage (64), les éléments de serrage étant disposés en biais par rapport à leur sens d'action (Fig. 11).

9. Direction assistée selon la revendication 1, **caractérisée** en ce que la douille de serrage (70) comporte des biais de serrage (67 et 68) inclinés respectivement dans des sens opposés dans les sections fonctionnelles (A et B), et en ce que les galets de serrage (71) s'engagent sur les biais de serrage des deux sections fonctionnelles (Fig. 12 et 13).

10. Direction assistée selon la revendication 1, **caractérisée** en ce que les dispositifs d'accouplement (2) tournent dans un lubrifiant.

11. Direction assistée selon la revendication 1, **caractérisée** en ce que les moyeux d' accouplement (22 et 23) sont montés sans jeu axial dans des paliers obliques (24 et 25) au moyen d'un palier d' écartement (26) (Fig. 1).

12. Direction assistée selon la revendication 1, **caractérisée** en ce que le moteur électrique (12) occupe un emplacement séparé par rapport au sous-ensemble comprenant l'engrenage à vis (16), les dispositifs d'accouplement (2) et le mécanisme de direction (4), la liaison s'effectuant au moyen d'un arbre articulé ou d'un arbre flexible (pas de dessin).

13. Direction assistée selon la revendication 1, **caractérisée** en ce que l'arbre de direction (1) et l'arbre de sortie (3) sont montés sans jeu axial dans les roulements (10 et 11) au moyen d'un ressort (8) (Fig. 1).

14. Direction assistée selon la revendication 1, **caractérisée** en ce que des rainures de lubrification (38 et 39) sont ménagées dans les moyeux d'accouplement (22 et 23).

15. Direction assistée selon la revendication 1, **caractérisée** en ce que les surfaces de friction des moyeux d'accouplement (22 et 23) sont revêtues d'un matériau résistant à l'usure.

16. Direction assistée selon la revendication 1, **caractérisée** en ce que la surface extérieure de la douille de serrage (69) comporte des nervures axiales (72 et 73) dans les zones où s'appuient les éléments de serrage (28 et 30) (Fig. 15).

17. Direction assistée selon la revendication 1, **caractérisée** en ce que le moteur électrique (12) contient un capteur de température (p. ex. une bilame) qui coupe l'alimentation électrique à une température déterminée (pas de dessin).

18. Direction assistée selon la revendication 1, **caractérisée** en ce que le moteur électrique (12) est enclenchable en fonction d'une faible vitesse de marche (p. ex. v ≦ 10 km/h) et déclenchable en cas de dépassement de cette vitesse (pas de dessin).
